# EUROPÄISCHE PATENTSCHRIFT

(11) **EP 1 659 024 B1**
(45) Veröffentlichungstag und Bekanntmachung des Hinweises auf die Patenterteilung: **09.04.2008**
(21) Anmeldenummer: 04027618.0
(22) Anmeldetag: 20.11.2004
(51) Int. Cl.: B60P 1/44

(54) **Hubladebühne mit gepratzter Aufhängung**
Loading platform with clamp suspension
Hayon élévateur avec une fixation en suspension à bride

(43) Veröffentlichungstag der Anmeldung: 24.05.2006
(73) Patentinhaber: Bär, Gerd, 74078 Heilbronn (DE)
(72) Erfinder: Bär, Gerd, 74078 Heilbronn (DE)
(74) Vertreter: Dreiss, Fuhlendorf, Steimle & Becker

(56) Entgegenhaltungen:
- EP-A- 0 786 374
- EP-A- 0 979 755
- EP-A- 1 036 698
- EP-A- 1 375 248
- FR-A- 2 760 216

## Beschreibung

### Stand der Technik

Die gegenständliche Erfindung bezieht sich auf die Montage von Standard Hubladebühnen an Fahrzeugen mit doppelt-T und U-förmigen Langträgern vornehmlich, aber nicht nur, an Trailer. Das Anpratzen von unterfahrbaren Hubladebühnen an solchen Fahrzeugen ist nicht nur seit mehreren Jahren bekannt, sondern zwischenzeitig eine marktgängige Technik. Eine pratzbare Montage von Standard Hubladebühnen ist wegen engen Platzverhältnissen, daraus resultierenden schmalen Anbauteilen und den dabei auftretenden sehr hohen Kräften wesentlich problematischer.

Als Stand der Technik ist das europäische Patent EP0 979 755 B1 und EP1 232 903 B1 bekannt geworden. Pratzbare Aufhängungen nach der Lehre dieser Patente sind vom Markt nicht angenommen worden.

### Technisches Problem

Bisher müssen vor der Montage auf den Trailer angepasste hubladebühnenspezifische Bauteile in die Rahmenlangträger eingeschweißt werden. Zweckmäßigerweise sind diese immer so ausgestaltet, dass die serienmäßigen oder speziellen Aufhängeplatten der jeweiligen Hubladebühnenhersteller dort angeschraubt oder angeschweißt werden können. Das vorherige Einschweißen dieser Bauteile, die man in der Summe einen Adapter nennen kann, in der Trailer-Produktion ist aufwendig, kontraproduktiv und in einer Serienproduktion gar nicht möglich. Ein nachträgliches Einschweißen dieser Bauteile bei der Montage ist nicht nur sehr zeitaufwendig, es erfordert auch qualifizierte geprüfte Schweißer und einen nachträglichen aufwendigen Oberflächenschutz der eingeschweißten Bauteile. Die Ergonomie des ganzen Verfahrens ist schlecht.

Zur Vermeidung dieser aufwendigen und umständlichen Montage wurde die pratzbare Aufhängung nach dem Patent EP0 979 755 B1 auf den Markt gebracht. Die breite Etablierung dieser Technik, die im Endeffekt eine Montage ohne jegliches Schweißen und Bohren am Fahrzeug zulässt und mit fertig oberflächenbeschichteten Bauteilen arbeitet, hat sich nicht durchgesetzt. Diese Ausführung hat sehr viele Teile was Montagezeit kostet und zudem noch teuer ist.

Das auf dem Markt befindliche weitere Produkt nach der EP1 232 903 B1 erfordert noch ein Bohren am Rahmensteg und erfüllt auch die zweite Forderung nach einer nachträglichen Korrektur der Lage der Hubladebühne zum Trailer nicht.

Wie eingangs schon erwähnt haben Standard Hubladebühnen wegen der oft eingeengten Platzverhältnissen relativ schmale Aufhängeelemente wie Aufhängeplatten und ähnliches. Durch die schmale Ausführung entstehen durch die kleinen Hebel sehr hohe Zug- und Druckkräfte, die in die Rahmenlangträger einzuleiten sind. Eine weitere Verschärfung ist dadurch gegeben, dass Standard Hubladebühnen mit sehr großen Plattformen zum Verschließen sehr hoher Aufbauten verwendet werden, die in Arbeitsteilung einen extrem hohen Lasthebel bewirken. Außerdem ist die Überlastung solcher Hubladebühnen an der Tagesordnung. Dies alles treibt die einzuleitenden Kräfte extrem in die Höhe.

Fahrzeugseitig hingegen haben sich die Bedingungen dadurch verschlechtert, dass die Fahrzeuge zur Erzielung einer höheren Nutzlast immer leichter gebaut werden. Die Langträger dieser Fahrzeuge sind insbesondere bei selbstragenden Kofferaufbauten nur noch da, um die Unterfahrschutzkräfte in das Achsaggregat einzuleiten. Hierfür werden entweder nur sehr leichte doppel-T oder U-Profile verwendet. Diese Profile können, die von den bekannten Einzel-Pratzen sehr hohen Kräfte nicht aufnehmen. Eine in Lastrichtung gehende Verbreiterung der Aufhängekonstruktion zur Erzielung niedriger Kräfte ist ebenfalls nicht möglich, da unmittelbar nach der Aufhängekonstruktion fahrzeugseitige Bauteile wie z. B. die mechanische Schnittstelle für die Unterfahrschutzeinrichtung liegt.

Aufgabe der Erfindung war es daher, eine leichte, stabile, einfach und schnell zu montierende und mit dem vorhandenen Platzbedarf auskommende Ausführung zu finden. Die Aufgabe wurde gemäß den Merkmalen des Anspruchs 1 gelöst.

### Erreichte Vorteile

Die gepratzte Hubladebühnen-Aufhängung nach vorliegender Erfindung ist sehr einfach und hat im Grunde genommen nur zwei Hauptteile, den Zug- und den Druckquerträger. Zur Befestigung sind nur noch zehn Einfach- oder sechs Einfach-Pratzen und zwei Doppel-Pratzen notwendig. Hubladebühnenseitig finden die modifizierten Aufhängeplatten Verwendung. Die Modifikation besteht nur in dem Einbringen des Lochbildes in die Stirnflansche. Diese modifizierte Aufhängeplatte wird im selben Produktionsprozess gleich mit diesen Löchern versehen. Die Hubladebühne selbst einschließlich der Tragrohranbindung an die Aufhängeplatten bleibt absolut serienmäßig, ohne jegliche Modifikation.

Durch wenige Teile ist die Montage auch sehr schnell durchzuführen. Die gesamten Bauteile können vor dem Fahrzeug mit der Hubladebühne komplett vormontiert werden, so dass die Montage ans Fahrzeug nur noch ein Pratzvorgang ist.

Durch die optimale festigkeitsrelevante Gestaltung der Zug- und Druckquerträger und durch die Verwendung von hochfestem Feinkornstahl ist die ganze Einrichtung mit 62 kg extrem gewichtsgünstig. Die Angaben gelten für eine Hubladebühne mit einem Lastmoment von 20 kNm.

Die Ausgestaltung des Zugquerträgers mit zweireihigen Pratzenhaltern mit zwei inneren und zwei äußeren Pratzen für jeweils zwei Pratzverbindungen innen und außen am Untergurt des jeweiligen Langträgers erlaubt die optimale Kräfteeinleitung in die Untergurte der gewichtsoptimierten Langträger der Fahrzeuge.

### Beschreibung

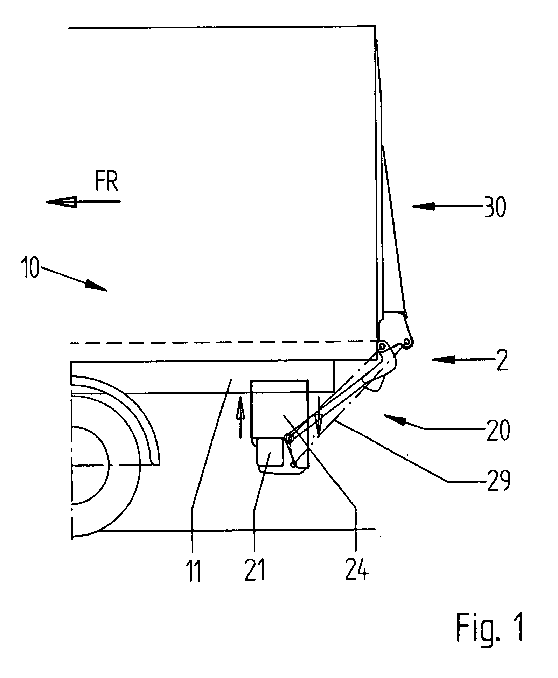

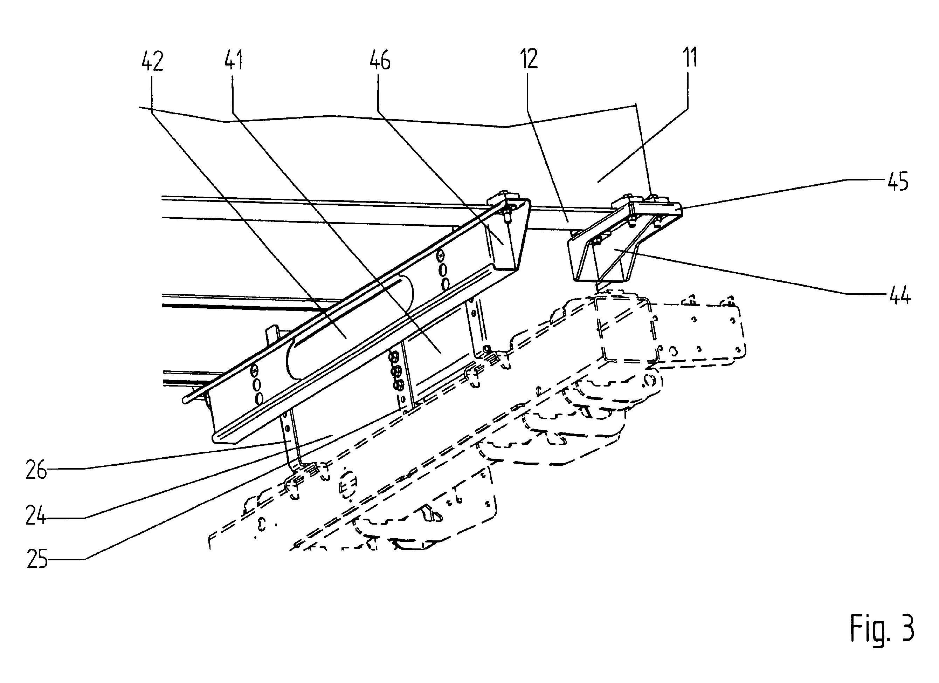

- Figur 1: zeigt eine Standard Hubladebühne (2) angebaut an das Fahrzeug (10). Die Standard Hubladebühne (2) besteht aus dem Hubwerk (20) und der Plattform (30), die in diesem Anbaufall den gesamten Aufbau von hinten verschließt. Das Hubwerk (20) besteht aus einem parallelogrammförmigen Hub- und Tragwerk, welches eine mechanische Basis im Tragrohr (21) hat. Das Tragrohr (21) seinerseits wird mit paarig angeordneten Aufhängeplatten (24) an den beiden Langträgern (11) befestigt. Die Figur 1 zeigt keinerlei Befestigungselemente. Die beiden Pfeile neben der Aufhängeplatte (24) deuten die hier wirkenden Zug- und Druckkräfte an.

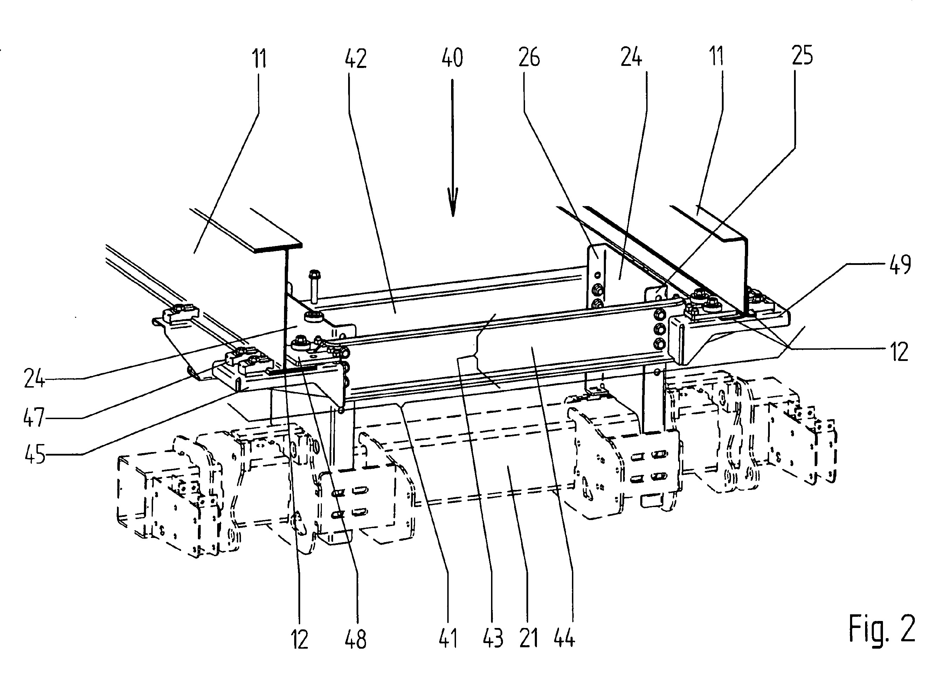

- Figur 2: zeigt die gepratzte Aufhängevorrichtung (40) und gestrichelt das Tragrohr (21) des Hubwerks (20). Vom Fahrzeug (10) werden lediglich die Langträger (11) gezeigt. Auf der linken Seite ist ein typischer doppel-T Träger asymmetrischer Ausführung dargestellt. Diese Art von Langträgern sind für Sattelauflieger mit Pritschen- oder Platoaufbau typisch. Die rechte Seite zeigt einen U-förmigen Langträger wie er bei selbstragenden Koffer-Sattelaufliegern hinter den Achsaggregaten verwendet wird. Das U-Profil hat naturgemäß nur einen Schenkel, hier nach innen. Um mit der Pratztechnik arbeiten zu können, erhält das U-Profil auf der Außenseite einen Winkel, dessen Schenkel einen Teil des Untergurt (12) bildet, so dass die Pratztechnik analog dem doppel-T Träger erfolgt.
Die gepratzte Aufhängung (40) besteht in erster Linie aus dem Zugquerträger (41) und dem Druckquerträger (42). Zwischen diesen beiden Querträgern liegen die Aufhängeplatten (24).
Bei der Montage des Hubwerks (20) liegt dies auf einer Palette oder besser auf einem Transport- und Montagegestell. Zuerst werden die beiden Aufhängeplatten (24) mit den dafür vorgesehenen Schrauben und Verbindungselemente lose an das Tragrohr montiert. Das Tragrohr hat entsprechende Anschlusselemente mit Langlöcher, so dass die beiden Aufhängeplatten auf das horizontale Abstandsmaß, der in den Zugquerträgern (41) und Druckquerträgern (42) vorgesehenen Lochreihe verschoben werden kann. Im zweiten Schritt wird der Zugquerträger (41) und der Druckquerträger (42) mit jeweils drei Schrauben pro Seite an den Stirnflanschen (25/26) verschraubt.
Die Lochreihen in den Stirnflanschen (25/26) haben eine gleiche Lochteilung, so dass das Hubwerk (20) entsprechend der Lochteilung in mehreren vertikale Positionen montiert werden kann. Die Position des Hubwerks (20) gegenüber den Langträgern (11) hängt von verschiedenen unterschiedlichen Maßparametern des Fahrzeugs und der Hubladebühne ab, was aber vor der Montage festgelegt ist. Nachdem alle Schrauben gesteckt sind, werden diese allesamt festigkeitsrelevant festgezogen. Damit bildet das Hubwerk (20) über die Aufhängeplatten (24) mit den Zug- und Druckquerträgern (41/42) eine feste Einheit.
Mittels eines entsprechenden Hubwagens oder Hubtisches oder sonstiger Hubeinrichtung wird nunmehr die so vormontierte Hubladebühne unter dem Fahrzeug positioniert, wobei die Pratzböden (49) der zweireihigen Pratzenhalter (45) und des Druckquerträgers (42) an den Untergurten (12) der Langträger (11) zur Anlage kommen. Danach werden die Einzelpratzen (47) und Doppelpratzen (48) (bei symmetrischen stabilen Trägern nur Einzelpratzen (47)) lose montiert.
Nach Ausrichtung des Hubwerks (20) entsprechend der den Aufbau verschließenden Plattform (30) werden alle Pratzverbindungen festigkeitsrelevant angezogen.
Bei dieser leichten Art von Langträgern (11) kann nicht mit den handelsüblichen Einzelpratzen (47) gearbeitet werden, da diese im Schenkel viel zu weit außen angreifen und das nur punktuell. Aus diesem Grund wird bei derartigen Langträgern zur besseren Kräfteeinleitung in den Steg des Langträgers (11) die Doppel-Pratze (48) verwendet. Diese übergreift die dünnen und weit auskragenden Untergurte (12). In beiden Fällen sind die Untergurte (12) auf der Außenseite kurz, weshalb dort die handelsüblichen Einzelpratzen (47) verwendet werden können.
Der Untergurt des U-Profils (43) endet jeweils am zweireihigen Pratzenhalter (45). Der Steg (44) des U-Profils (43) hingegen durchquert den zweireihigen Pratzenhalter (45) auf der Innenseite ganz und setzt sich unterhalb des Pratzenbodens (49) fort bis an das Ende des zweireihigen Pratzenhalters (45) (siehe auch Figur 3). So gesehen ruht der zweireihigen Pratzenhalter (45) auf dem untergreifenden Steg (44).
Der Obergurt des U-Profils (43) läuft soweit es die Schraubmöglichkeiten der Doppelpratzen (48) erlauben über den zweireihigen Pratzenhalter (45). Im Übergang auf den Steg (44) ist auf der linken Seite zu sehen, wie der Steg (44) in den Pratzenboden (49) des zweireihigen Pratzenhalters (45) eintaucht. Diese stabilitätsverbessernde Maßnahme fordert andererseits die nicht näherbezifferte Ausnehmung in der Doppelpratze (48).
Der Druckquerträger (42) seinerseits ist pro Seite nur außen mit einer Einzelpratze (47) befestigt, da hier ja nur Druck eingeleitet wird.
- Figur 3: zeigt eine Untersicht, entgegen der Fahrtrichtung. Rechts oben ist der zweireihigen Pratzenhalter (45) von unten zu sehen. Der sich verjüngende Steg (44) des U-Profils (43) leitet die Zugkräfte, die über die Stirnflansche (25) der Aufhängeplatten (24) eingeleitet werden symmetrisch in den zweireihigen Pratzenhalter (45). Damit werden die Kräfte symmetrisch über die Pratzen (47/48) in den Untergurt (12) des Langträgers (11) eingeleitet.
Links ist der Druckquerträger (42) zu erkennen. Er besteht im wesentlichen aus einem gekanteten C-Profil, welches im Bereich der Stege der Langträger (11) die Schottbleche (46) hat. Im Ausführungsbeispiel ist dieses Schottblech (46) nicht nur Schottblech, sondern in einem Stück gekantet mit der rückseitigen Schließung des C-Profils zum Kasten. Damit wird in dem Bereich, in dem die hohen Kräfte auftreten ein hohes Wiederstandsmoment des Druckquerträgers (42) gebildet. Die Schottplatten (46) dienen der gleichmäßigen Flächenpressung an der Schnittstelle zwischen dem Druckquerträger (42), dem Untergurt (12) und vor allen Dingen dem dünnwandigen Steg des Langträger (11).
Die Verbindung des Druckquerträgers (42) mit den Stirnflanschen (26) der Aufhängeplatte (24) erfolgt nur an der senkrechten Fläche, die am Stirnflansch (26) anliegt. Hierfür ist der winkelförmige Fortsatz der Schottplatte (46) an den drei Schraubpunkten entsprechend ausgespart, so dass mit der Stecknuss des Schlagschraubers oder Drehmomentschlüssels durchgegriffen werden kann.
Zugquerträger (41) und Druckquerträger (42) sind jeweils eine Schweißbaugruppe. Schweißnähte sind nicht gezeichnet. Alle Baugruppen und Einzelbauteile sind mit nicht näher bezifferten Schrauben verbunden.

### Legende

- 10: Fahrzeug
- 11: Langträger
- 12: Untergurt
- 2: Hubladebühne
- 20: Hubwerk
- 21: Tragrohr
- 24: Aufhängeplatten
- 25: Stirnflansch (Zug)
- 26: Stirnflansch (Druck)
- 29: Parallelzylinder
- 30: Plattform
- 40: gepratzte HLB-Aufhängung
- 41: Zugquerträger
- 42: Druckquerträger
- 43: U-Profil
- 44: Steg
- 45: Doppel-Pratzenhalter
- 46: Schottblech
- 47: Einfachpratze
- 48: Doppelpratze
- 49: Pratzenboden

## Patentansprüche

1. Hubladebühne (2) zur Befestigung an Fahrzeugen (10), umfassend eine Plattform (30), ein im wesentlichen parallelogrammförmiges Hubwerk (20) zum Heben und Senken der Plattform (30) mit mindestens einem Parallelzylinder (29) zum Verschwenken der Plattform (30) von einer horizontalen Arbeitsstellung in eine vertikale Fahrstellung und umgekehrt, weiter umfassend zwei Aufhängeplatten (24), einen Zugquerträger (41) und einen Druckquerträger (42), die beide einstückig ausgeführt sind, wobei die Hubladebühne (2) mittels einer Pratzverbindung am Untergurt (12) des jeweiligen Langträgers (11) des Fahrzeugs befestigbar ist, **dadurch gekennzeichnet, dass** der Zugquerträger (41) im wesentlichen aus einem U-Profil (43) besteht und sich an dessen beiden Enden jeweils ein zweireihiger Pratzenhalter (45) mit zwei inneren und zwei äußeren Pratzen (47, 48) für jeweils zwei Pratzverbindungen innen und außen am Untergurt (12) des jeweiligen Langträgers (11) anschließt.

2. Hubladebühne mit gepratzter Aufhängung nach Anspruch 1,
**gekennzeichnet dadurch,**
**dass** der verlängerte Steg (44) des U-Profils (43) die zweireihigen Pratzenhalter (45) unterhalb des Pratzenbodens (49) mittig ganz untergreift.

3. Hubladebühne mit gepratzter Aufhängung nach den Ansprüchen 1 oder 2,
**gekennzeichnet dadurch,**
**dass** der Zugquerträger (41) an seinem Steg (44) mit dem ersten Stirnflansch (25) der Aufhängeplatte (24) verschraubt ist.

4. Hubladebühne mit gepratzter Aufhängung nach Anspruch 1,
**gekennzeichnet dadurch,**
**dass** der Druckquerträger (42) aus einem teilweise offenen geschweißten Kastenprofil besteht, dessen an der Aufhängeplatte anliegende Seite mit dem zweiten Stirnflansch (26) der Aufhängeplatte (24) verschraubt ist.

5. Hubladebühne mit gepratzter Aufhängung nach den Ansprüchen 1 und 4,
**gekennzeichnet dadurch,**
**dass** die obere Fläche des Druckquerträgers (42) gleichzeitig die Pratzfläche ist.

6. Hubladebühne mit gepratzter Aufhängung nach den Ansprüchen 1, 4 und 5,
**gekennzeichnet dadurch,**
**dass** der kastenförmige Druckquerträger (42) beiderseits je ein fest verbundenes Schottblech (46) hat, und die Schottbleche (46) 1300 - 1400 mm voneinander beabstandet sind.

7. Hubladebühne mit gepratzter Aufhängung nach einem der Ansprüche 1 - 6,
**gekennzeichnet dadurch,**
**dass** die senkrechte Lochteilung der Zugquerträger (41) und Druckquerträger (42) und der Stirnflansche (25/26) der Aufhängeplatte (24) gleich ist.

## Claims

1. A load-lifting platform (2) for securing to vehicles (10), including a platform (30), a substantially parallelogram-shaped lifting mechanism (20) for raising and lowering the platform (30), and having at least one parallel cylinder (29) for swiveling the platform (30) from a horizontal working position into a vertical travel position and vice versa, further including two suspension plates (24), one tension crossbeam (41) and one compression crossbeam (42), both embodied in one piece, the load-lifting platform (2) being capable of being secured by means of a clamp connection to the lower belt (12) of each longitudinal beam (11) of the vehicle, **characterized in that** the tension crossbeam (41) substantially comprises a U profile section (43), and both of its ends are adjoined by a respective two-row clamp holder (45) with two inner and two outer clamps (47, 48), each for two clamp connections on the inside and outside on the lower belt (12) of the respective longitudinal beam (11).

2. The load-lifting platform with clamp suspension as defined by claim 1,
**characterized in that**
the elongated web (44) of the U profile section (43) engages the two-row clamp holders (45) centrally and entirely from beneath, under the clamp base (49).

3. The load-lifting platform with clamp suspension as defined by claim 1 or 2,
**characterized in that**
the tension crossbeam (41) is screwed at its web (44) to the first end flange (25) of the suspension plate (24).

4. The load-lifting platform with clamp suspension as defined by claim 1,
**characterized in that**
the compression crossbeam (42) comprises a partly open welded box profile section, whose side contacting the suspension plate is screwed to the second end flange (26) of the suspension plate (24).

5. The load-lifting platform with clamp suspension as defined by claims 1 and 4,
**characterized in that**
the upper face of the compression crossbeam (42) is at the same time the clamping face.

6. The load-lifting platform with clamp suspension as defined by claims 1, 4 and 5,
**characterized in that**
the boxlike compression crossbeam (42), on each side, has one solidly joined bulkhead plate (46) each, and the bulkhead plates (46) are spaced apart from one another by 1300-1400 mm.

7. The load-lifting platform with clamp suspension as defined by one of claims 1-6,
**characterized in that**
the vertical hole pitch is the same in the tension crossbeam (41), the compression crossbeam (42), and the end faces (25/26) of the suspension plate (24).

## Revendications

1. Hayon élévateur de chargement (2) destiné à être fixé à des véhicules (10), comprenant une plate-forme (30), un groupe de levage (20) sensiblement en forme de parallélogramme pour le soulèvement et l'abaissement de la plate-forme (30), avec au moins un vérin parallèle (29) pour le pivotement de la plate-forme (30) d'une position de travail horizontale dans une position de circulation verticale et inversement, et comprenant par ailleurs deux plaques d'accrochage (24), une traverse de traction (41) et une traverse de compression (42) qui sont toutes les deux réalisées d'un seul tenant, le hayon élévateur de chargement (2) pouvant être fixé à l'aide d'une liaison par griffes de serrage sur la semelle inférieure (12) du longeron (11) respectif du véhicule,
**caractérisé en ce que** la traverse de traction (41) est essentiellement constituée par un profilé en U (43), et **en ce qu'**à chacune de ses deux extrémités se raccorde respectivement un support de griffes de serrage (45) à deux rangées, comprenant deux griffes de serrage intérieures et deux griffes de serrage extérieures (47, 48) pour réaliser respectivement deux liaisons de serrage par griffes à l'intérieur et à l'extérieur de la semelle inférieure (12) du longeron (11) respectif.

2. Hayon élévateur de chargement accroché par griffes de serrage, selon la revendication 1, **caractérisé en ce que** l'âme prolongée (44) du profilé en U (43) s'engage totalement par-dessous les supports de griffes de serrage (45) à deux rangées, au milieu sous la semelle de support de griffes de serrage (49).

3. Hayon élévateur de chargement accroché par griffes de serrage, selon la revendication 1 ou 2, **caractérisé en ce que** la traverse de traction (41) est assemblée par vissage, au niveau de son âme (44), au premier flasque frontal (25) de la plaque d'accrochage (24).

4. Hayon élévateur de chargement accroché par griffes de serrage, selon la revendication 1, **caractérisé en ce que** la traverse (42) est constituée par un profilé en caisson soudé, partiellement ouvert, dont le côté appliqué contre la plaque d'accrochage, est assemblé par vissage au deuxième flasque frontal (26) de la plaque d'accrochage (24).

5. Hayon élévateur de chargement accroché par griffes de serrage, selon les revendications 1 et 4, **caractérisé en ce que** la surface supérieure de la traverse de compression (42) forme en même temps la surface de serrage par griffes.

6. Hayon élévateur de chargement accroché par griffes de serrage, selon les revendications 1, 4 et 5, **caractérisé en ce que** la traverse de compression (42) en forme de caisson possède sur chacun des deux côtés, respectivement une tôle de fermeture (46) liée de manière fixe à la traverse, et les tôles de fermeture (46) sont espacées l'une de l'autre de 1300 - 1400 mm.

7. Hayon élévateur de chargement accroché par griffes de serrage, selon l'une des revendications 1 à 6, **caractérisé en ce que** l'espacement de perçage de la traverse de traction (41) et de la traverse de compression (42) et des flasques frontaux (25/26) de la plaque d'accrochage (24), est le même.
